# EUROPÄISCHE PATENTSCHRIFT

(11) **EP 0 491 449 B1**
(45) Veröffentlichungstag und Bekanntmachung des Hinweises auf die Patenterteilung: **12.10.1994**
(21) Anmeldenummer: 91250316.6
(22) Anmeldetag: 18.11.1991
(51) Int. Cl.: B61H 15/00, F16D 65/56

(54) **Einrichtung für die automatische oder handbetätigte Einstellung des Bremsbackenspiels an Bremsen mit Bremsgestänge, insbesondere für Bremsen von Schienenfahrzeugen**
Automatical or manual brake shock slack adjusting device on brakes with brake rods, especially for brakes of railway vehicles
Dispositif de raddrapage automatique ou manuel de jeu de mâchoire de frein aux freins avec tringlerie, notamment pour freins de véhicules ferroviaires

(30) Priorität: 17.12.1990 DE 4040798
(43) Veröffentlichungstag der Anmeldung: 24.06.1992
(73) Patentinhaber: MANNESMANN Aktiengesellschaft, 40027 Düsseldorf (DE)
(72) Erfinder: Lehnert, Erhard, W-3162 Uetze/Dollbergen (DE); Windel, Manfred, W-3000 Hannover (DE)
(74) Vertreter: Presting, Hans-Joachim, Dipl.-Ing.

(56) Entgegenhaltungen:
- EP-A- 0 058 833
- EP-A- 0 174 690
- EP-A- 0 304 735
- FR-A- 2 500 897

## Beschreibung

Die Erfindung betrifft eine Einrichtung für die automatische oder handbetätigte Einstellung des Bremsbackenspiels an Bremsen mit Bremsgestänge, insbesondere für Bremsen von Schienenfahrzeugen, mit einem feststehenden Gehäuse, in dem ein fluidisch oder von Hand betätigbarer Kolben zwecks Erzeugung und Einleitung der Bremskraft beaufschlagbar ist, wobei zwischen Gehäuse und Kolben eine Rückstellfeder angeordnet ist, ferner mit einem zur Kolbenachse koaxialen, nicht selbsthemmenden Gewindeteil und einer mit dem Gewindeteil zusammenwirkenden Einstellmutter und mit einer zwischen Einstellmutter und Kolben mittelbar federnd abgestützten Einstellhülse, wobei die Einstellhülse zwecks Hinderung an einer Drehung bzw. Freigabe der Drehung mittels einer zwischen Gewindeteil und Einstellhülse angeordneten ersten Kupplung einkuppelbar bzw. auskuppelbar ist und für die Einstellhülse ein gehäusefester Anschlag vorgesehen ist und wobei zwecks Hinderung an einer Drehung bzw. Freigabe der Drehung, wenn die erste Kupplung ausgerückt ist, zwischen dem Kolben und dem Gewindeteil eine zweite Kupplung vorgesehen ist.

Derartige Verschleißnachstelleinrichtungen werden hauptsächlich in Verbindung mit Kolben und Bremsgestängen eingesetzt, wobei zum Bremsen eine vorhandene Elastizität des Bremsgestänges ausgenutzt wird, um eine volle Bremskraft von der Bremse auf die Bremsfläche zu übertragen. Die Brems-Zylinder-Kolbeneinheit umfaßt für die Beseitigung des Bremsspiels oder für deren Nachstellung zumindest eine Mutter-Spindel-Baugruppe, die in die Brems-Zylinder-Kolben-Einheit zu integrieren ist.

Man unterscheidet nach dem Stand der Technik sog. Zwei-Muttern-Systeme (GB-PS 1,022,134), die jedoch aufwendig und mit großen Längen- und Durchmesser-Dimensionen verbunden sind. In neuerer Zeit wurden die Zwei-Muttern-Systeme durch ein Ein-Mutter-System gelöst (EP 0 174 690). Dieses Ein-Mutter-System baut auf einer Steuerhülse auf, die unter Federkraft stehend über eine erste Kupplung verhindert, daß die Mutter über eine Drehbewegung eine Längenverstellung der Kolbenspindel bewirkt. Nach Durchlaufen eines vorherbestimmten Spielweges "A" wird durch Vorschieben der Kolbenstange über den Weg "A" hinaus die erste Kupplung gelöst, so daß die Verstellung des Spielwegs erhöht werden kann entsprechend dem eingetretenen Bremsen-Verschleiß. Eine weitere Kolben-Vorschubbewegung hat das Einkuppeln einer zweiten Kupplung zur Folge, so daß daraufhin die Verstellung der Mutter auf der Spindel gestoppt wird.

An dieser Stelle baut die bekannte Lösung durch Aneinanderreihung einer Kolbenhülse, der Mutter, einem Axiallager und einer Axiallagerhülse aufwendig lang und teuer. Außerdem führt die konzentrische Anordnung einer Kolbenausziehfeder, der Kolbenhülse sowie der Mutter und der Axiallagerhülse radial zu einem unerwünscht großen Durchmesser, so daß hier zum Schutz der Einrichtungsteile zumindest ein größerer Faltenbalg erforderlich wird. Je nach dem, welche Nenn-Durchmesser bzw. Nenn-Bremskräfte zu übertragen sind, ist die bekannte Lösung mehr oder weniger unhandlich und kosten- bzw. raumaufwendig.

Der vorliegenden Erfindung liegt demgegenüber die Aufgabe zugrunde, eine räumlich kompakte Nachstelleinrichtung zu schaffen, so daß die Gesamteinrichtung kurz und im Durchmesser klein gehalten werden kann.

Die gestellte Aufgabe wird, ausgehend von der eingangs bezeichneten Gattung, erfindungsgemäß dadurch gelöst, daß die Einstellhülse in einem Kolbenhohlraum des Kolbens angeordnet ist, daß die Bremskrafteinleitung durch einen zentrischen kurzen Kolbenkernteil einer zentrischen Kolbenstange erfolgt und daß die Einstellmutter hohl ausgeführt ist und einen Innengewindeabschnitt aufweist und mit dem Innengewindeabschnitt in das Außengewinde des Gewindeteils eingreift. Dadurch ist es möglich, die gesamte Nachstelleinrichtung in den hinteren Bereich der Kolben-Zylinder-Einheit zu verlegen, ohne die Kolben-Zylinder-Einheit selbst im Durchmesser oder in der Länge vergrößern zu müssen. Im Gegenteil können wesentlich kleinere Dimensionen sowohl der Länge als auch des Durchmessers erzielt werden. Die Auswirkungen dieser Verlegung sind sodann ein im Durchmesser verkleinerter vorderer Bereich der Gesamteinrichtung und eine erheblich verbesserte Kompaktheit der Nachstelleinrichtungsteile. Weitere Vorteile sind eine erheblich kürzer Einstellhülse, eine verbesserte Raumausnutzung, ein vereinfachter Kolbenaufbau sowie eine fertigungstechnisch günstigere Lösung für die sich ergebenden Einzelteile.

In Verbesserung der Erfindung ist vorgesehen,daß die Einstellhülse mit zumindest einem Radialarm durch einen sich axial erstreckenden Ausschnitt einer die zentrische Kolbenstange umgebenden Gehäusehülse greift und einen Anschlag zusammen mit dem Gehäuse und eine Verdrehsicherung bildet. Hier wird demzufolge eine ohnehin vorhandene Fläche als Anschlagfläche ausgenutzt, so daß eine genaue Lage der Anschlagfläche gesichert wird. Dadurch kann auch das Maß "A" genauer als bisher festgelegt werden.

Eine einfache und sichere Lagerung der Einstellmutter wird darüber hinaus dadurch erzielt, daß die Einstellmutter in der Gehäusehülse geführt ist.

Weitere Vorteile der Erfindung ergeben sich dadurch, daß die zweite Kupplung mittels einer stirnseitigen Verzahnungspaarung des zentrischen Kolbenkernschaftes gebildet ist. Hierdurch wird der überraschende Vorteil erzielt, daß die erste und die zweite Kupplung mit ihren Wirk-Ringstirnflächen in jeweils einer Ebene liegen, d.h. die Kupplungszähne der Einstellhülse und des Kolbens einerseits und die Kupplungszähne der Stirnseite des Gewindeteils andererseits können jeweils zusammen hergestellt werden. Hier tritt noch der zusätzliche Effekt auf, daß die Kupplungszähne des Gewindeteils sowohl für den Eingriff in die Kupplungszähne des Kolbens als auch der Einstellhülse dienen können. Darin liegt ein besonderer Vorteil bezüglich der Kompaktheit und bezüglich der geringen Abmessungen der Gesamteinrichtung.

In der Zeichnung ist ein Ausführungsbeispiel der Erfindung schematisch dargestellt und wird nachfolgend näher beschrieben. Es zeigen:

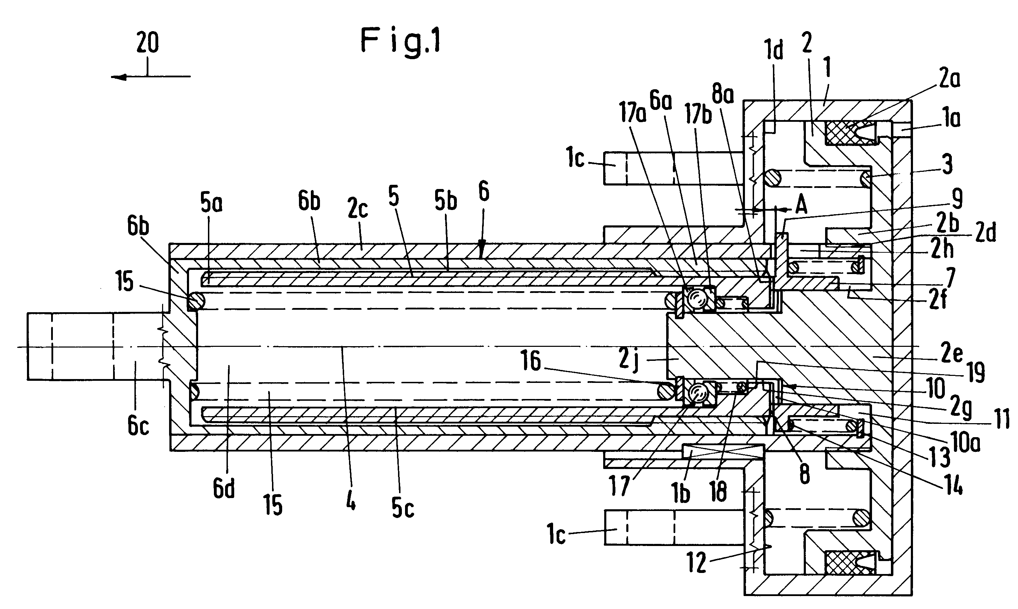

- Fig. 1: einen axialen Längsschnitt durch die Einrichtung in ihrer Grundstellung und
- Fig. 2: denselben axialen Längsschnitt wie Fig. 1 nach Voreinstellung des Maßes "A".

Die Einrichtung für die automatische oder handbetätigte Einstellung des Bremsbackenspiels an Bremsen mit Bremsgestänge, insbesondere für Bremsen von Schienenfahrzeugen, weist ein feststehendes Gehäuse 1 auf mit einem Medienanschluß 1a. Das Medium hydraulischer oder pneumatischer Art treibt einen Kolben 2 an. Der Kolben 2 trägt die Kolbendichtung 2a, bildet einen Befestigungsansatz 2b für eine Gehäusehülse 2c, die mittels einer Gewindepaarung 2d verbunden sind. Der Kolben 2 ist ferner mit einem Kolbenkernteil 2e ausgestattet, der selbst Kolbenkernschäfte 2f und 2g bildet. Diese zentrischen Kolbenkernschäfte 2f und 2g bzw. der Kolbenkernteil 2e vereinfachen die weitere Gestaltung erheblich und schaffen die Voraussetzung für die Anordnung weiterer Bauteile. Zwischen Gehäuse 1 und Kolben 2 ist eine starke Rückstellfeder 3 angeordnet, die als Druckfeder ausgebildet ist. Das Gehäuse 1 steht ferner mittels eines Einlegekeils 1b mit der Gehäusehülse 2c derart in Verbindung, daß dadurch sowohl der Kolben 2 als auch die Gehäusehülse 2c an einer Drehung gehindert sind. Das Gehäuse 1 ist wie üblich mittels gehäusefesten Vorsprüngen 1c im nicht näher dargestellten Bremsgestänge-System gelagert.

Weiterhin ist ein zur Kolbenachse 4 koaxialer, nicht selbsthemmender Gewindeteil 5, bestehend aus einer innen hohlen Gewindehülse 5a vorgesehen, der den Kolbenkernschaft 2g umfaßt. Mit dem Gewindeteil 5 wirkt eine Einstellmutter 6 zusammen, deren relativ kurzer Innengewindeabschnitt 6a in dem sich von dem Kolben 2 wegerstreckenden Bereich zu einer langgestreckten Buchse 6b mit angeschlossenem Befestigungsauge 6c weitergeformt ist.

Zwischen der Einstellmutter 6 und dem Kolben 2 ist eine federnd abgestützte Einstellhülse 7 auf dem Kolbenkernschaft 2f gleitend geführt, wobei die Einstellhülse 7 zwecks Hinderung an einer Drehung bzw. Freigabe der Drehung mittels einer zwischen dem Gewindeteil 5 und der Einstellhülse 7 angeordneten ersten Kupplung 8, bestehend aus einer Verzahnungspaarung 8a einkuppelbar bzw. auskuppelbar ist. Die Einstellhülse 7 besitzt einen Radialarm 9, der durch einen Ausschnitt 2h der Gehäusehülse 2c ragt. Die Vorderkante des Radialarms 9 steht vor Einstellung einer Bremsen-Lösestellung unter einem Abstand "A" gegenüber der Innenfläche 1d des Gehäuses 1. Zwecks Hinderung an einer Drehung bzw. für die Freigabe der Drehung, wenn die erste Kupplung 8 ausgerückt ist, befindet sich zwischen dem Kolben 2, d.h. dem Kolbenkernschaft 2g, zugeordnet und dem Gewindeteil 5 eine zweite Kupplung 10, die ebenfalls aus einer Verzahnungspaarung 10a gebildet ist.

Die Erfindung erzielt nunmehr den vorstehend geschilderten einfachen Aufbau und zugleich eine erhebliche fertigungstechnische wirtschaftliche Herstellung dadurch, daß die Einstellhülse 7 weitestgehend in einem Kolbenhohlraum 11 des Kolbens 2 angeordnet ist. Die Bremskrafteinleitung erfolgt durch den zentrischen, kurzen Kolbenkernteil 2e einer kurzen Kolbenstange 2j. Die Einstellmutter 6 ist hohl ausgeführt und weist den Innengewindeabschnitt 6a auf und greift mit dem Innengewindeabschnitt 6a in das Außengewinde 5b des Gewindeteils 5 ein.

Die Einstellhülse 7 mit zumindest einem Radialarm 9 greift durch den sich axial erstreckenden Ausschnitt 2h einer die zentrische Kolbenstange 2j umgebenden Gehäusehülse 2c und bildet zusammen mit dem Gehäuse 1 einen Anschlag 12 und zugleich eine Verdrehsicherung. Zwischen der Einstellhülse 7 und einem in der Gehäusehülse 2c eingelassenen Axialring 13 ist eine weitere mittelstarke Druckfeder 14 eingespannt.

Die Einstellmuter 6 ist in der Gehäusehülse 2c geführt.

Die langgestreckte Buchse 6b der Einstellmutter 6 nimmt in einem ebenso langgestreckten hohlen Innenraum 6d eine gegenüber der Druckfeder 14 stärkere Druckfeder 15 auf. Diese Druckfeder 15 stützt sich einseitig auf die Innenfläche der Buchse 6b und auf der anderen Seite gegen einen in der kurzen Kolbenstange 2j eingelassenen Axialring 16. Vorteilhafterweise ist gegen den Axialring 16 auf der gegenüberliegenden Ringfläche ein Axialwälzlager 17 angeordnet, dessen einer Axiallagerring 17a an den Kolbenkernschaft 2g und dessen anderer Axiallagerring 17b in der Innenfläche 5c des Gewindeteils 5 verschieblich gelagert sind. Eine weitere schwächere Druckfeder 18 liegt gegen den Axiallagerring 17b und gegen eine Stirnringfläche 19 an.

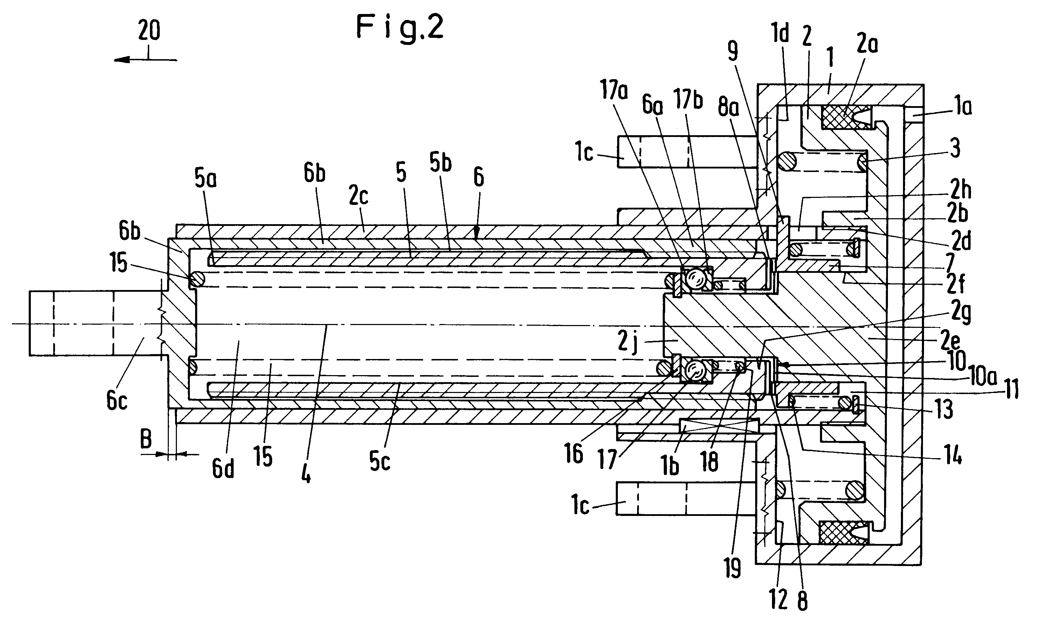

Die Funktionsweise der Einrichtung ist nachstehend beschrieben:
1. Lösestellung:
   In Lösestellung ist die erste Kupplung 8 durch die Kraft der Druckfeder 14 eingekuppelt, so daß eine Drehung der Einstellmutter 6 nicht erfolgen kann. Das fest vorherbestimmte und eingestellte Maß "A" stellt das Spiel dar, das die Bremse zur Bremsfläche einnehmen soll, falls keine Bremswirkung benötigt wird.
2. Bremsanlegung bei normalem Leerspiel:
   Beim Bremsen bewegt sich der Kolben 2 mit Gehäusehülse 2c in Pfeilrichtung 20, wobei die erste Kupplung 8 zunächst noch durch die Kraft der Druckfeder 14 verriegelt ist. Sobald das Maß "A" zu Null wird, legt der Radialarm 9 an dem Anschlag 12 an und wird abgestoppt. In dieser Lage sind die Bremsbacken noch ohne Bremskraft an die Bremsflächen angelegt. Es kann jedoch jetzt ohne zeitliche Verzögerung gebremst werden. Der Kolben 2 mit der Buchse 6 bewegt sich weiter und die Kupplung 8 wird gelöst. Da das Nachstellspiel "A" gleichzeitig durchlaufen wird, findet keine Nachstellung statt und die zweite Kupplung 10 geht in Eingriff.
3. Bremsanlegung bei zu großem Leerspiel:
   Bei zu großem Leerspiel sind die Bremsbacken noch nicht an die Bremsscheibe angelegt, wenn das Leerspiel "A" durchlaufen ist. Der Kolben 2 bewegt sich daher weiter, und die erste Kupplung 8 wird wie beschrieben gelöst. Die Druckfeder 15 wird gespannt und drückt, wie in Fig. 2 gezeigt ist, die Buchse 6b in Pfeilrichtung 20. Hierbei wird die Kupplung 10 vorübergehend gelöst, so daß sich der Gewindeteil im Innengewindeabschnitt 6a drehen kann und den in Fig. 2 sichtbaren Ausschub "B" bewirkt. In diesem Augenblick liegt die Bremse an der Bremsscheibe an und es könnte eine Bremsung bzw. Vollbremsung eingeleitet werden. Dann ist auch wieder die zweite Kupplung 10 eingekuppelt, so daß eine weitere Verdrehung des Gewindeteils 5 unterbleibt.

## Patentansprüche

1. Einrichtung für die automatische oder handbetätigte Einstellung des Bremsbackenspiels an Bremsen mit Bremsgestänge, insbesondere für Bremsen von Schienenfahrzeugen, mit einem feststehenden Gehäuse (1), in dem ein fluidisch oder von Hand betätigbarer Kolben (2) zwecks Erzeugung und Einleitung der Bremskraft beaufschlagbar ist, wobei zwischen Gehäuse (1) und Kolben (2) eine Rückstellfeder (3) angeordnet ist, ferner mit einem zur Kolbenachse (4) koaxialen, nicht selbsthemmenden Gewindeteil (5) und einer mit dem Gewindeteil (5) zusammenwirkenden Einstellmutter (6) und mit einer zwischen Einstellmutter (6) und Kolben (2) mittelbar federnd abgestützten Einstellhülse (7), wobei die Einstellhülse (7) zwecks Hinderung an einer Drehung bzw. Freigabe der Drehung mittels einer zwischen Gewindeteil (5) und Einstellhülse (7) angeordneten ersten Kupplung (8) einkuppelbar bzw. auskuppelbar ist und für die Einstellhülse (7) ein gehäusefester Anschlag (9) vorgesehen ist und wobei zwecks Hinderung an einer Drehung bzw. Freigabe der Drehung, wenn die erste Kupplung (8) ausgerückt ist, zwischen dem Kolben (2) und dem Gewindeteil (5) eine zweite Kupplung (10) vorgesehen ist,
dadurch gekennzeichnet,
daß die Einstellhülse (7) in einem Kolbenhohlraum (11) des Kolbens (2) angeordnet ist, daß die Bremskrafteinleitung durch einen zentrischen, kurzen Kolbenkernteil (2e) einer zentrischen Kolbenstange (2j) erfolgt und daß die Einstellmutter (6) hohl ausgeführt ist und einen Innengewindeabschnitt (6a) aufweist und mit dem Innengewindeabschnitt (6a) in das Außengewinde (5b) des Gewindeteils (5) eingreift.

2. Einrichtung nach Anspruch 1,
dadurch gekennzeichnet,
daß die Einstellhülse (7) mit zumindest einem Radialarm (9) durch einen sich axial erstreckenden Ausschnitt (2h) einer die zentrische Kolbenstange (2j) umgebenden Gehäusehülse (2c) greift und einen Anschlag (12) zusammen mit dem Gehäuse (1) und eine Verdrehsicherung bildet.

3. Einrichtung nach den Ansprüchen 1 und 2,
dadurch gekennzeichnet,
daß die Einstellmutter (6) in der Gehäusehülse (2c) geführt ist.

4. Einrichtung nach einem oder mehreren der Ansprüche 1 bis 3,
dadurch gekennzeichnet,
daß die zweite Kupplung (10) mittels einer stirnseitigen Verzahnungspaarung (10a ) des zentrischen Kolbenkernschaftes (2f bzw. 2g) gebildet ist.

## Claims

1. An apparatus for the automatic or manually-operated adjustment of the brake block play on brakes with a brake linkage, in particular for brakes of rail-borne vehicles, with a stationary housing (1) in which a piston (2) which can be actuated by fluid or manually can be acted upon for the purpose of producing and introducing the braking force, with a restoring spring (3) being located between the housing (1) and piston (2), and also with a non-self-locking threaded part (5) coaxial to the piston axis (4) and an adjustment nut (6) which cooperates with the threaded part (5), and with an adjustment sleeve (7) indirectly resiliently supported between the adjustment nut (6) and piston (2), the adjustment sleeve (7) being able to be engaged or disengaged for preventing rotation or release of the rotation by means of a first coupling (8) located between the threaded part (5) and adjustment sleeve (7) and a stop (9) fixed to the housing being provided for the adjustment sleeve (7), and a second coupling (10) being provided between the piston (2) and the threaded part (5) for preventing rotation or release of the rotation when the first coupling (8) is disconnected,
characterised in that
the adjustment sleeve (7) is located in a piston cavity (11) of the piston (2), that the introduction of braking force takes place by means of a centric, short piston core part (2e) of a centric piston rod (2j) and that the adjustment nut (6) is hollow and has an internal threaded section (6a) and engages with the internal threaded section (6a) in the external thread (5b) of the threaded part (5).

2. An apparatus according to Claim 1, characterised in that the adjustment sleeve (7) engages with at least one radial arm (9) through an axially-extending section (2h) of a housing sleeve (2c) surrounding the centric piston rod (2j) and forms a stop (12) together with the housing (1) and an anti-torsion means.

3. An apparatus according to Claims 1 and 2,
characterised in that the adjustment nut (6) is guided in the housing sleeve (2c).

4. An apparatus according to one or more of Claims 1 to 3, characterised in that the second coupling (10) is formed by means of an end-face pair of teeth (10a) of the centric piston core shank (2f or 2g).

## Revendications

1. Dispositif pour le réglage automatique ou manuel du jeu des mâchoires de frein sur des freins à timonerie de frein, en particulier pour des freins de véhicules sur rails, comportant un carter fixe (1), dans lequel peut être alimenté un piston (2) pouvant être actionné de façon fluidique ou manuellement, dans le but d'engendrer et de provoquer la force de freinage, un ressort de rappel (3) étant agencé entre le carter (1) et le piston (2), comportant de plus une partie filetée (5), non autobloquante, coaxiale à l'axe du piston (4), et un écrou de réglage (6) coopérant avec la partie filetée (5), et une douille de réglage (7) s'appuyant de façon élastique indirectement entre l'écrou de réglage (6) et le piston (2), la douille de réglage (7) pouvant être couplée ou découplée, dans le but d'empêcher une rotation ou de libérer la rotation, au moyen d'un premier accouplement (8) agencé entre la partie filetée (5) et la douille de réglage (7) et, pour la douille de réglage (7), une butée (9) solidaire du carter étant prévue, et un second accouplement (10) étant prévu entre le piston (2) et la partie filetée (5), dans le but d'empêcher une rotation ou de libérer la rotation, quand le premier accouplement (8) est désembrayé,
caractérisé en ce que la douille de réglage (7) est agencée dans une cavité (11) du piston (2), en ce que l'introduction de la force de freinage est effectuée par une partie centrale courte (2e) d'une tige de piston centrale (2j), et en ce que l'écrou de réglage (6) est creux et présente un segment taraudé (6a) et s'engage, par le segment taraudé (6a), dans le filetage externe (5b) de la partie filetée (5).

2. Dispositif selon la revendication 1,
caractérisé en ce que la douille de réglage (7) s'engage par au moins un bras radial (9) à travers une découpe (2h), s'étendant axialement, d'une douille de carter (2c) entourant la tige de piston centrale (2j) et forme une butée (12) conjointement avec le carter (1) et une sécurité en torsion.

3. Dispositif selon les revendications 1 et 2,
caractérisé en ce que l'écrou de réglage (6) est guidé dans la douille de carter (2c).

4. Dispositif selon une ou plusieurs des revendications 1 à 3,
caractérisé en ce que le second accouplement (10) est formé au moyen d'un appariement denté frontal (10a) de l'arbre central (2f ou 2g) du piston.
